# DEMANDE DE BREVET EUROPEEN

(11) **EP 4 686 086 A1**
(43) Date de publication de la demande: **28.01.2026**
(21) Numéro de dépôt: 25191163.2
(22) Date de dépôt: 23.07.2025
(51) Int. Cl.: H02S 20/22, H02S 30/20

(54) **DISPOSITIF PHOTOVOLTAÏQUE COMPORTANT UN SUPPORT APTE À SE DÉFORMER ET SYSTÈME DE DÉPLIEMENT OU REPLIEMENT ASSOCIÉ**

(30) Priorité: 24.07.2024 FR 2408160
(71) Demandeur: Soleil sur Yvette Photovoltaique, 92160 Antony (FR)
(72) Inventeur: LINCOT, Daniel, 92160 ANTONY (FR); LOURTIOZ, Jean-Michel, 92160 ANTONY (FR)
(74) Mandataire: Berton, Anthony Christian Jacques

(57) **Abrégé**

L'invention concerne un dispositif photovoltaïque (1) pour la conversion de l'énergie lumineuse en énergie électrique comportant un support (2) léger et flexible apte à se replier, caractérisé en ce que ledit support (2) comporte des logements (3) configurés pour contenir chacun un module photovoltaïque (4), ledit support (2) comportant au moins une ouverture (5), ladite ouverture étant positionnée entre deux logements (3) et permet la circulation de l'air. L'invention concerne en outre un système de déploiement ou de repliement dudit dispositif photovoltaïque (1) et un bâtiment comportant un tel système.

## Description

L'invention porte sur les moyens de collecte de l'énergie lumineuse pour sa conversion en énergie électrique.

La demande de brevet US2014027069 décrit un store photovoltaïque comportant un ou plusieurs panneaux photovoltaïques souples enroulables et déroulables sur un tambour rotatif. En outre, le store comporte un tube de ventilation et un ventilateur générant un flux d'air sous le store. Le tambour rotatif et le tube de ventilation se situent dans une cassette fixée à un mur. La cassette comporte un moteur pour permettre l'enroulement et le déroulement du store. L'ensemble de ces éléments est fixé en hauteur et les panneaux photovoltaïques sont enroulés sur le tambour. Le store est intégré dans la fenêtre.

En outre, la demande de brevet FR3081286 décrit un écran d'ombrage souple et mobile pour une serre agricole. L'écran peut coopérer avec un support pour présenter une configuration déployée ou une configuration repliée. L'écran comporte une surface d'extension principale comprenant des films photovoltaïques et des films transparents. Les films photovoltaïques et les films transparents sont positionnés successivement de façon alternative sur ledit écran. L'écran est installé horizontalement, de façon que ledit déploiement s'effectue selon un axe horizontal. Les films photovoltaïques sont repliés par enroulement.

Il est connu de l'art antérieur la demande de brevet WO2006032077 qui décrit un ensemble comportant un écran rectangulaire flexible lié à deux poutres parallèles étroitement espacées de façon que ledit écran puisse coulisser sur lesdites poutres pour se déformer dans le sens de la longueur, sans modification de sa largeur. L'écran sert à ajuster le niveau de protection des cultures agricoles vis-à-vis d'un rayonnement solaire excessif. L'ensemble comporte une pluralité de lattes rigides positionnées transversalement entre les deux poutres. L'écran est posé au-dessus des lattes rigides. En outre, ledit ensemble comporte des crochets fixés aux extrémités des lattes pour maintenir l'écran en position. Les crochets sont équipés de tiges filetées qui traversent l'écran et se vissent dans les lattes. Les extrémités de l'écran sont enroulées autour de tubes rigides et fixées à ces tubes par des mécanismes pivotants. Un levier coudé, fixé à chaque extrémité des tubes, permet de maintenir l'écran en place et d'attacher un cordon de traction, passant par un œillet central, pour déplacer l'écran longitudinalement entre les deux poutres. L'écran comporte des panneaux de collecte d'énergie solaire. Cependant, des inconvénients subsistent. L'installation d'un tel ensemble est complexe. En effet, il est d'abord nécessaire de procéder à l'installation des poutres, des lattes, des crochets et du levier coudé pour pouvoir étendre l'écran. Cela demande de l'espace, car l'installation est horizontale, et du temps. Le déplacement de l'écran entre les deux poutres se fait manuellement, ce qui représente un risque en cas d'intempéries notamment car il est possible que l'utilisateur ne soit pas à proximité dudit ensemble lorsque l'intempérie survient. De plus, l'invention, destinée à des applications horizontales sur un terrain agricole, n'est pas adaptée pour couvrir des structures préexistantes, notamment des bâtiments.

L'objectif de la présente invention est de remédier à ces inconvénients et de présenter une solution de conversion de l'énergie lumineuse en énergie électrique adaptée pour couvrir, au moins partiellement, un bâtiment.

Pour atteindre cet objectif, l'invention propose un dispositif photovoltaïque pour la conversion de l'énergie lumineuse en énergie électrique comportant un support apte à se déformer et à laisser passer au moins partiellement l'air, remarquable en ce que ledit support comporte des logements configurés pour contenir chacun un module photovoltaïque, ledit support comportant au moins une ouverture, ladite ouverture étant positionnée entre deux logements.

Grâce à l'invention, il est possible de convertir de l'énergie lumineuse en énergie électrique sur un support flexible pouvant être facilement monté, notamment sur un bâtiment.

De préférence, ledit support est un filet.

Le filet permet le passage de l'air afin de limiter les effets de surpression et de favoriser la circulation de l'air le long de la structure.

Avantageusement, chaque logement présente une forme longitudinale, chaque logement présentant au moins une extrémité ouverte, ledit module photovoltaïque étant apte à être inséré dans ledit logement ou retiré dudit logement à travers ladite extrémité.

Le dispositif photovoltaïque peut donc être assemblé ou désassemblé facilement en insérant simplement des modules photovoltaïques dans les logements.

De préférence, chaque logement comporte un support complémentaire de façon que ledit support et ledit support complémentaire forment ledit logement, ledit support complémentaire comportant un filet ou un film transparent.

Ainsi, la lumière atteint les modules photovoltaïques de façon qu'elle puisse être convertie efficacement en énergie électrique.

En outre, l'invention concerne un système de déploiement ou de repliement d'un dispositif photovoltaïque précédemment décrit remarquable en ce que ledit système comporte au moins une poulie et un filin configurés pour interagir ensemble, ledit filin étant relié au dispositif photovoltaïque, lesdits logements comportant chacun l'un des modules photovoltaïques, ledit système comportant un moteur, ledit moteur étant lié au filin, ledit moteur étant configuré pour entraîner ledit filin, ledit dispositif photovoltaïque étant configuré pour présenter deux configurations :
- une configuration déployée dans laquelle ledit support est tendu, lesdits modules photovoltaïques étant sensiblement alignés les uns par rapport aux autres ;
- une configuration repliée dans laquelle les modules photovoltaïques, sensiblement superposés les uns sur les autres.

Ainsi, le dispositif photovoltaïque peut être déployé et replié à tout moment.

Avantageusement, lesdits modules photovoltaïques présentent au moins une extrémité latérale, chaque extrémité latérale étant positionnée du même côté dudit support, chaque module photovoltaïque étant connecté électriquement avec ledit module photovoltaïque précédent et/ou avec ledit module photovoltaïque suivant.

Ainsi, les connexions électriques ne se positionnent pas entre les modules photovoltaïques lorsque ledit dispositif photovoltaïque est replié.

De préférence, ledit système comporte un caisson de stockage, ledit caisson de stockage étant configuré pour comporter ledit dispositif photovoltaïque dans la configuration repliée.

Le caisson de stockage permet de protéger le dispositif photovoltaïque des intempéries, notamment de la pluie, qui est susceptible de le détériorer lorsque ledit dispositif photovoltaïque présente la configuration repliée.

Avantageusement, ledit moteur est positionné dans ledit caisson de stockage.

De cette manière, le moteur est protégé, notamment en cas d'intempéries.

De préférence, ledit système comporte un boîtier de commande configuré pour commander le déploiement ou le repliement dudit dispositif photovoltaïque.

Cela permet de pouvoir actionner le moteur à distance.

L'invention concerne également un bâtiment comportant un sol formant un plan de base défini par une première direction longitudinale, par une deuxième direction transversale et orthogonale à la première direction et une troisième direction verticale orthogonale à la première direction et à la deuxième direction orientée en s'éloignant du sol, ledit bâtiment comportant une façade et/ou un toit, ledit bâtiment comportant un système de déploiement ou de repliement d'un dispositif photovoltaïque précédemment décrit, remarquable en ce que ladite poulie est fixée au bâtiment par un moyen de fixation, ledit moyen de fixation étant positionné sur ladite façade ou sur ledit toit.

Le positionnement du dispositif photovoltaïque sur un bâtiment permet une collecte optimale de l'énergie lumineuse. De plus, cela ne nécessite pas un grand espace car le dispositif photovoltaïque épouse la forme du bâtiment par sa flexibilité.

De préférence, ledit dispositif photovoltaïque présente une hauteur selon la troisième direction définissant le haut et le bas dudit dispositif photovoltaïque, le haut étant le point le plus éloigné dudit sol, le bas étant le point le plus proche du sol, le dispositif photovoltaïque étant configuré pour être entraîné du bas vers le haut pour passer de la configuration repliée à la configuration déployée, le dispositif photovoltaïque étant configuré pour être entraîné du haut vers le bas pour passer de la configuration déployée à la configuration repliée de façon que ledit module photovoltaïque positionné le plus en bas est le premier à se replier.

De préférence, ledit système comporte ledit caisson de stockage, ledit caisson de stockage étant positionné sur le sol.

Ainsi, la maintenance des éléments contenus dans ledit caisson de stockage est facilitée car ce dernier est directement accessible, sans aménagement particulier.

L'invention sera davantage détaillée par la description de modes de réalisation non limitatifs, et sur la base des figures annexées illustrant des variantes de l'invention, dans lesquelles :
- [Fig.1] illustre schématiquement un dispositif photovoltaïque comportant des modules photovoltaïques selon l'invention ;
- [Fig.2] illustre schématiquement un système de déploiement ou de repliement du dispositif photovoltaïque illustré sur la figure 1 monté sur un mur selon un premier mode de réalisation ;
- [Fig.3] illustre schématiquement un système de déploiement ou de repliement du dispositif photovoltaïque illustré sur la figure 1 monté sur un bâtiment selon un deuxième mode de réalisation ;
- [Fig.4] illustre schématiquement un système de déploiement ou de repliement du dispositif photovoltaïque illustré sur la figure 1 monté sur un bâtiment selon un troisième mode de réalisation.

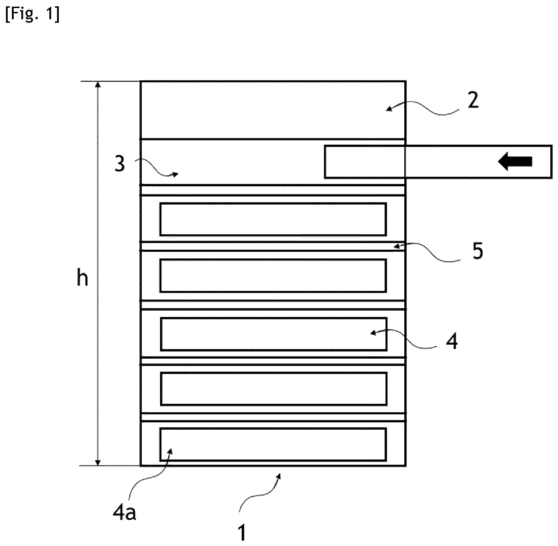

Il est illustré schématiquement sur la figure 1 un dispositif photovoltaïque 1 selon l'invention. Le dispositif photovoltaïque 1 est léger et permet la conversion de l'énergie lumineuse en énergie électrique. Le dispositif photovoltaïque 1 comporte un support 2 flexible apte à se déformer et à laisser passer au moins partiellement l'air. De préférence, le support 2 est un filet. Alternativement, ledit support 2 est un film transparent. Le support 2 comporte une pluralité de logements 3. Chaque logement 3 est configuré pour contenir un module photovoltaïque 4. Optionnellement, chaque logement 3 comporte un support complémentaire de façon que ledit support 2 et ledit support complémentaire forment ledit logement 3. Le support complémentaire est préférentiellement un filet, dont le maillage peut être différent du filet du support 2. La taille des mailles de chaque filet pouvant varier de préférence entre 0,1 cm et 30 cm. Alternativement, le support complémentaire est un film transparent continu. Optionnellement, le film transparent est coloré pour améliorer l'apparence de l'installation sans que la coloration n'affecte de façon significative la transmission globale de l'énergie lumineuse. En effet, la coloration ne peut diminuer la transmission globale de plus de 10%. De préférence, chaque logement 3 présente une forme longitudinale. Chaque logement 3 présente au moins une extrémité ouverte. Ainsi, le module photovoltaïque 4 est apte à être introduit dans ledit logement 3 par glissement en passant à travers ladite extrémité ouverte. De la même façon, le module photovoltaïque 4 est apte à être retiré dudit logement 3 par glissement inverse. Le sens d'introduction est illustré par une flèche sur la figure 1. Toutefois, il s'agit d'un exemple non limitatif. Le module photovoltaïque 4 comporte une pluralité de cellules photovoltaïques. Sur la figure 1, ledit support 2 comporte six modules photovoltaïques, dont un est en cours d'introduction. Le support 2 comporte également une pluralité d'ouvertures 5, chaque ouverture 5 étant positionnée entre deux logements 3. Les ouvertures 5 permettent la circulation de l'air, ce qui permet notamment d'éviter l'échauffement des modules photovoltaïques 4 et permet d'éviter les surpressions d'air. De plus, la présence d'ouvertures 5 participe à rendre plus léger ledit dispositif photovoltaïque 1, ce qui facilite son installation. De préférence, lesdits modules photovoltaïques 4 comportent chacun au moins une extrémité latérale 4a. Lorsqu'ils sont présents dans lesdits logement 3, chaque module photovoltaïque 4 est connecté électriquement avec ledit module photovoltaïque 4 précédent et/ou avec ledit module photovoltaïque suivant. La connexion électrique est effectuée au niveau de leur extrémité latérale 4a, chaque extrémité latérale 4a étant positionnée en regard de l'extrémité latérale 4a de l'un ou des autres modules photovoltaïques 4. En d'autres termes, les connexions électriques entre chaque module photovoltaïque 4 sont effectuées sur un même côté dudit support 2.

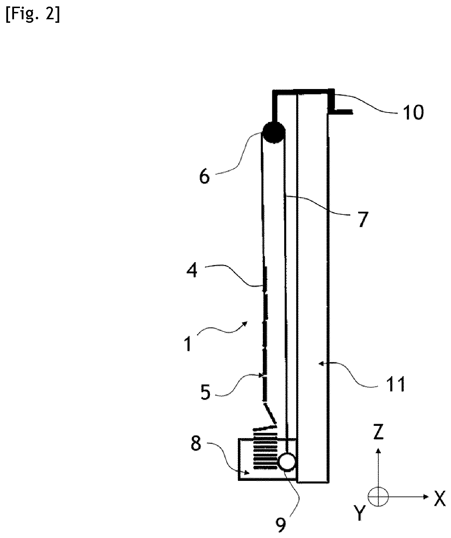

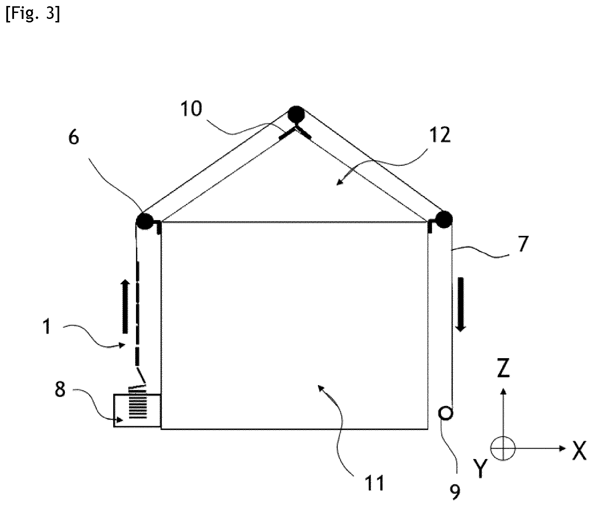

La figure 2 illustre un système de déploiement ou de repliement dudit dispositif photovoltaïque 1 selon un premier mode de réalisation. Le système comporte au moins une poulie 6 et un filin 7. Le filin 7 et la poulie 6 coopèrent de façon que ledit filin 7 coulisse sur ladite poulie 6 pour permettre le déplacement du dispositif photovoltaïque 1. En outre, ledit système comporte un moteur 9. Préférentiellement, le système fournit l'énergie produite au réseau électrique et alimente ledit moteur 9. Alternativement, dans le cas d'une installation en site isolé, ledit système comporte une batterie chargée par les modules photovoltaïques 4 qui alimente électriquement ledit moteur 9. Le moteur 9 est configuré pour entraîner ledit filin 7 de façon à déplier ou à replier ledit dispositif photovoltaïque 1. De préférence, le système comporte un caisson de stockage 8 dans lequel ledit dispositif photovoltaïque 1 est stocké lorsqu'il est replié. Sur la figure 2, ledit moteur 9 est positionné dans ledit caisson de stockage 8. Alternativement, dans un deuxième mode de réalisation, ledit moteur 9 est positionné à l'extérieur dudit caisson de stockage 8, comme cela est illustré dans la figure 3. Le filin 7 est relié au moteur 9 et au dispositif photovoltaïque 1. Le moteur 9 est apte à entraîner ledit filin 7 de façon à déplier ou à replier ledit dispositif photovoltaïque 1. Ainsi, ledit dispositif photovoltaïque 1 est apte à présenter une configuration déployée dans laquelle ledit support 2 est tendu. Les modules photovoltaïques 4 sont sensiblement alignés. Sur la figure 1, ledit dispositif photovoltaïque 1 est représenté dans la configuration déployée. En outre, ledit dispositif photovoltaïque 1 est apte à présenter une configuration repliée dans laquelle ledit support 2 est plié au niveau de chaque ouverture 5 de façon que lesdits modules photovoltaïques 4 sont sensiblement superposés les uns sur les autres dans ledit caisson de stockage 8. En d'autres termes, le dispositif photovoltaïque 1 présente une forme d'accordéon dans la configuration repliée. En effet, lesdites ouvertures 5 forment charnières de façon à articuler ledit support 2 pour permettre la superposition successive des modules photovoltaïques 4 lors du repliement. Sur la figure 2, le dispositif photovoltaïque 1 est représenté dans une configuration intermédiaire dans laquelle une partie des modules photovoltaïques 4 sont alignés et une autre partie des modules photovoltaïques 4 sont empilés dans ledit caisson de stockage 8. Sur la figure 2, la façade 11 d'un bâtiment est illustré. Le bâtiment comporte un sol formant un plan de base défini par une première direction longitudinale, par une deuxième direction transversale et orthogonale à la première direction X et une troisième direction verticale orthogonale à la première direction X et à la deuxième direction orientée en s'éloignant du sol. La poulie 6 est fixée à la façade 11 d'un bâtiment par un moyen de fixation 10 murale. Dans un deuxième mode de réalisation, ladite poulie 6 est fixée sur un toit 12 du bâtiment par l'intermédiaire dudit moyen de fixation 10. De préférence, le moyen de fixation 10 ne nécessite pas de percer la façade 11 ou le toit 12. Alternativement, la poulie 6 est fixée en haut d'un mât pour éviter sa fixation sur ladite façade 11. Le deuxième mode de réalisation est illustré sur la figure 3. Pour commander le repliement ou le déploiement dudit dispositif photovoltaïque 1, ledit système comporte, de préférence, un boîtier de commande. De préférence, le boîtier de commande est localisé sur ledit caisson de stockage 8. Alternativement, ledit boîtier de commande est localisé à distance du caisson de stockage. Ainsi, en cas de la survenue d'une forte intempérie susceptible de dégrader ledit dispositif photovoltaïque 1, il est possible de commander son repliement. A titre d'exemple, le boîtier de commande est localisé dans un bâtiment. Ainsi, un utilisateur est en mesure de commander le déploiement ou le repliement du dispositif photovoltaïque 1 depuis ledit bâtiment, à l'abri des éventuelles intempéries.

Sur la figure 3, ledit système comporte trois poulies 6, l'une desdites poulies 6 étant positionnées au sommet du toit 12 dudit bâtiment, tandis que les deux autres poulies 6 sont positionnées sur deux façades distinctes, les deux façades étant positionnées en regard l'une de l'autre. Le caisson de stockage 8 et le moteur 9 sont positionnés de part et d'autre dudit bâtiment. Ainsi, lorsque le moteur 9 s'actionne, le filin 7 est tiré vers ledit moteur 9 tel que cela est indiqué par les flèches sur la figure 3, de façon que ledit dispositif photovoltaïque 1 sort dudit caisson de stockage 8 afin de se déplier. Le sens illustré par les flèches sur la figure 3 n'est pas limitatif. En effet, pour replier ledit dispositif photovoltaïque 1, il est nécessaire d'entraîner ledit filin 7 dans le sens opposé au sens illustré par les flèches sur la figure 3. Le dispositif photovoltaïque 1 est placé le long de la façade 11 et/ou sur le toit 12. Les modules photovoltaïques 4 placés dans ledit support 2 sont monté en continu, c'est-à-dire que chaque logement 3 comporte un module photovoltaïque 4, ou bien de manière discontinue en laissant un ou plusieurs logements 3. De préférence, ledit dispositif photovoltaïque 1 présente une hauteur h définie par une direction orientée en s'éloignant du sol. La hauteur h définit donc le haut et le bas dudit dispositif photovoltaïque 1. Dans la configuration déployée, le bas est la partie dudit dispositif photovoltaïque 1 la plus proche du sol. A l'inverse, le haut du dispositif photovoltaïque est la partie la plus éloignée du sol. De préférence, le dispositif photovoltaïque 1 est configuré pour être entraîné du bas vers le haut pour passer de la configuration repliée à la configuration déployée. De plus, le dispositif photovoltaïque 1 est configuré pour être entraîné du haut vers le bas pour passer de la configuration déployée à la configuration repliée. En effet, ledit module photovoltaïque 4 positionné le plus en bas est le premier à se replier. Sur la figure 3, ledit caisson de stockage 8 est positionné en bas dudit dispositif photovoltaïque 1, sur le sol.

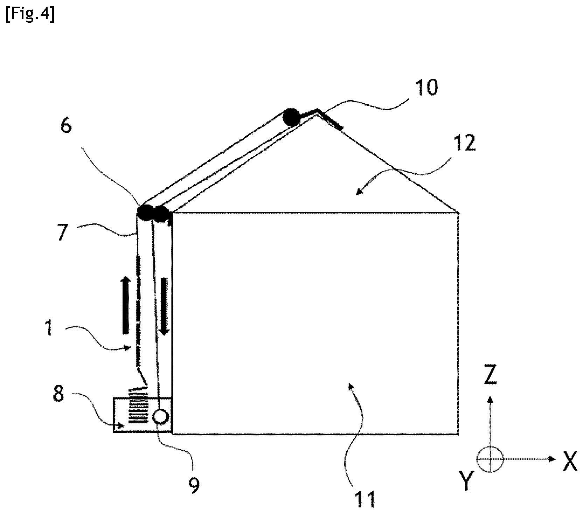

La figure 4 illustre le système de déploiement ou de repliement du dispositif photovoltaïque 1 sur le bâtiment selon un troisième mode de réalisation. Sur la figure 4, ledit système comporte trois poulies 6 dont deux poulies 6 sont positionnées l'une sur l'autre sur une façade 11 tandis que la dernière poulie 6 est localisée au sommet du toit 12. Dans ce troisième mode de réalisation, le moteur 9 est positionné dans ledit caisson de stockage 8. Ainsi, il est possible de déployer ledit dispositif photovoltaïque 1 en regard la façade 11 du bâtiment et/ou en regard du toit 12. Les flèches illustrées sur la figure 4 définissent le sens de déplacement du filin 7 permettant de déployer ledit dispositif photovoltaïque 1. Lorsque le filin 7 se coulisse dans le sens inverse de celui illustré par lesdites flèches, ledit dispositif photovoltaïque 1 est replié.

L'installation est caractérisée par sa légèreté. En effet, les modules photovoltaïques 4 comportent des éléments dont le poids peut descendre à moins de 500g/m2 au lieu de 15 à 25 kg/m² pour les technologies classiques sur verre, permettant une installation verticale ou inclinée suivant les descriptions précédentes, très difficile avec des technologies classiques. De telles installations pourraient atteindre des puissances plus élevées d'une dizaine de kW ou plus.

Les modules photovoltaïques 4 sont des technologies en couche mince positionnés dans le support flexible. A titre d'exemple, Les couches minces sont de type silicium amorphe, pérovskite, organique ou inorganique. Préférentiellement les couches minces sont de type inorganique CIGS (acronyme signifiant Cuivre, Indium, Gallium et Sélénium). Cela offre une flexibilité et une résistance à la flexion accrues par rapport à la technologie silicium en plaquette, dont la fragilité est grande. Néanmoins, des modules photovoltaïques 4 légers avec cette technologie sont intégrables dans le cadre de l'invention.

Dans un exemple, une installation de 12 m² déployable en façade a été réalisée avec dix modules photovoltaïques 4 de forme rectangulaire comportant des couches minces de type CIGS. Chaque module photovoltaïque 4 présentait des dimensions de 3 m sur 0,3 m et pesait 2,6 kg, pour une puissance de 125 W. La puissance crête totale était de 1,25 kW. Le déploiement vertical sur poulie et le repliement sont effectués avec un moteur de 250 W en 30 secondes.

## Revendications

1. Dispositif photovoltaïque (1) pour la conversion de l'énergie lumineuse en énergie électrique comportant un support (2) apte à se déformer et à laisser passer au moins partiellement l'air, **caractérisé en ce que** ledit support (2) comporte des logements (3) configurés pour contenir chacun un module photovoltaïque (4), ledit support (2) comportant au moins une ouverture (5) formant charnière de façon à articuler ledit support (2), ladite ouverture étant positionnée entre deux logements (3).

2. Dispositif photovoltaïque (1) selon la revendication 1 **caractérisé en ce que** ledit support (2) est un filet.

3. Dispositif photovoltaïque (1) selon la revendication 1 ou 2 **caractérisé en ce que** chaque logement (3) présente une forme longitudinale, chaque logement (3) présentant au moins une extrémité ouverte, ledit module photovoltaïque (4) étant apte à être inséré dans ledit logement (3) ou retiré du logement (3) à travers ladite extrémité.

4. Dispositif photovoltaïque selon l'une quelconque des revendications 1 à 3 **caractérisé en ce que** chaque logement (3) comporte un support complémentaire de façon que ledit support (2) et ledit support complémentaire forment ledit logement (3), ledit support complémentaire comportant un filet ou un film transparent.

5. Système de déploiement ou de repliement d'un dispositif photovoltaïque (1) selon l'une quelconque des revendications 1 à 4 **caractérisé en ce que** ledit système comporte au moins une poulie (6) et un filin (7) configurés pour interagir ensemble, ledit filin (7) étant relié au dispositif photovoltaïque (1), lesdits logements (3) comportant chacun l'un des modules photovoltaïques (4), ledit système comportant un moteur (9), ledit moteur (9) étant lié au filin (7), ledit moteur (9) étant configuré pour entraîner ledit filin (7), ledit dispositif photovoltaïque (1) étant configuré pour présenter deux configurations :
- une configuration déployée dans laquelle ledit support (2) est tendu, lesdits modules photovoltaïques (4) étant sensiblement alignés les uns par rapport aux autres ;
- une configuration repliée dans laquelle les modules photovoltaïques (4) sont sensiblement superposés les uns sur les autres.

6. Système selon la revendication 5 **caractérisé en ce que** lesdits modules photovoltaïques (4) présentent au moins une extrémité latérale (4a), chaque extrémité latérale (4a) étant positionnée du même côté dudit support (2), chaque module photovoltaïque (4) étant connecté électriquement avec ledit module photovoltaïque (4) précédent et/ou avec ledit module photovoltaïque (4) suivant.

7. Système selon la revendication 5 ou 6 **caractérisé en ce que** ledit système comporte un caisson de stockage (8), ledit caisson de stockage (8) étant configuré pour comporter ledit dispositif photovoltaïque (1) dans la configuration repliée.

8. Système selon la revendication 7 **caractérisé en ce que** ledit moteur (9) est positionné dans ledit caisson de stockage (8).

9. Système selon l'une quelconque des revendications 5 à 8 **caractérisé en ce que** ledit système comporte un boîtier de commande configuré pour commander le déploiement ou le repliement dudit dispositif photovoltaïque (1).

10. Bâtiment comportant un sol formant un plan de base défini par une première direction (X) longitudinale, par une deuxième direction (Y) transversale et orthogonale à la première direction (X) et une troisième direction (Z) verticale orthogonale à la première direction (X) et à la deuxième direction (Y) orientée en s'éloignant du sol, ledit bâtiment comportant une façade (11) et/ou un toit (12), ledit bâtiment comportant un système de déploiement ou de repliement d'un dispositif photovoltaïque (1) selon l'une quelconque des revendications 5 à 9, **caractérisé en ce que** ladite poulie (6) est fixée au bâtiment par un moyen de fixation (10), ledit moyen de fixation (10) étant positionné sur ladite façade (11) ou sur ledit toit (12).

11. Bâtiment selon la revendication 10 **caractérisé en ce que** ledit dispositif photovoltaïque (1) présente une hauteur (h) selon la troisième direction (Z) définissant le haut et le bas dudit dispositif photovoltaïque (1), le haut étant le point le plus éloigné dudit sol, le bas étant le point le plus proche du sol, le dispositif photovoltaïque (1) étant configuré pour être entraîné du bas vers le haut pour passer de la configuration repliée à la configuration déployée, le dispositif photovoltaïque (1) étant configuré pour être entraîné du haut vers le bas pour passer de la configuration déployée à la configuration repliée de façon que ledit module photovoltaïque (4) positionné le plus en bas est le premier à se replier.

12. Bâtiment selon la revendication 10 ou 11 **caractérisé en ce que** ledit système comporte ledit caisson de stockage (8), ledit caisson de stockage (8) étant positionné sur le sol.
